# EUROPEAN PATENT SPECIFICATION

(11) **EP 1 350 051 B1**
(45) Date of publication and mention of the grant of the patent: **18.08.2010**
(21) Application number: 01271513.2
(22) Date of filing: 21.12.2001
(51) Int. Cl.: F16L 19/08, F16L 47/04, F16L 47/06, F16L 47/08, F16L 19/07, F16L 19/06, F16L 19/065

(54) **COUPLING BODY FOR POLYMERIC PIPES INCLUDING A PIPE ABUTMENT SURFACE**
KUPPLUNGSKÖRPER FÜR POLYMERROHRE MIT EINER ROHRSTOSSFLÄCHE
ELEMENT DE RACCORD POUR TUYAUX EN POLYMERE COMPRENANT UNE SURFACE DE BUTEE POUR LE TUYAU

(30) Priority: 21.12.2000 AU PR223100
(43) Date of publication of application: 08.10.2003
(73) Proprietor: PHILMAC PTY. LTD., North Plympton, S.A. 5037 (AU)
(72) Inventor: CHELCHOWSKI, David, Largs Bay, S.A. 5016 (AU); PUCKETT, Geoffrey, Hallett Cove, S.A. 5158 (AU)
(74) Representative: Eder, Ephry
(86) International application number: PCT/AU2001/001665
(87) International publication number: WO 2002/050469

(56) References cited:
- EP-A- 0 201 288
- EP-A2- 0 915 281
- WO-A-98/10212
- WO-A2-97/34099
- DE-U1- 29 623 772
- FR-A- 2 269 020
- US-A- 4 037 864
- US-A- 5 230 539
- US-A- 5 593 186
- US-A- 5 593 186
- DATABASE WPI Week 199722, Derwent Publications Ltd., London, GB; Class Q67, AN 1997-243281, XP002968278 & JP 9 079 462 A (USUI KOKUSAI SANGYO KK) 25 March 1997
- DATABASE WPI Week 199915, Derwent Publications Ltd., London, GB; Class A88, AN 1999-176359, XP002968279 & JP 11 030 390 A (USUI KOKUSAI SANGYO KK) 02 February 1999

## Description

Coupling for engagement of polymeric pipes where the pipe is inserted into a coupling to a first position and where tightening of the coupling causes the pipe to be drawn further into said coupling.

In particular this invention relates to a coupling that is suitable for engaging the outer surface of a polymeric pipe and where a pipe is inserted into an already assembled coupling. Provided in the coupling is a first stop indicating to a user that a pipe has been sufficiently inserted into the pipe, there remaining sufficient space to accommodate further movement of the pipe under tightening of the coupling nut.

### BACKGROUND OF THE INVENTION

Polymeric pipe couplings are well known and typically include a body, nut, and grip ring. A pipe is inserted into the body. Tightening of the nut compresses the grip ring that in turn engages the pipe. Further tightening of the nut causes urging of the pipe further into the body. A typical coupling was described and illustrated in our United States Patent 5,593,186 entitled "Coupling for Outer Surface Engagement of Polymeric Pipe". The described coupling is adapted for engagement with the outer surface of a polymeric pipe. The coupling includes a sub-assembly of a compression sleeve, a resilient gasket ring permanently attached to the inner end of the compression sleeve, a gripping member, and a nut. The gasket ring encounters an abutment in a socket in the body as the nut is tightened, and further tightening of the nut radially compresses the gripping member so that its inwardly directed barbed projections engage the outer surface of a pipe to which the coupling is attached. The end of the pipe is freely insertable through the gripping member and sleeve and into the socket in the body. There are also provided abutment surfaces within the body coupling and the nut that abut inner and outer surfaces of a flange outstanding from the outer end of the compression sleeve. Also disclosed is an embodiment with a transition spigot having a barbed tail inserted into an end of a pipe enabling the coupling to accommodate a range of similar but different diameter pipes.

The coupling described in the aforesaid specification and other earlier couplings have proven to be very successful, both technically and commercially. Failure is almost unknown and in some areas of the world fittings made in accordance with that specification have achieved great success.

A practical problem which is frequently encountered with couplings made in accordance with said patent 5,593,186 (and other fittings having in common a gripping member and a tightening nut), is that when the nut has been partially tightened it radially compresses the gripping member causing the inwardly directed barbed projections to engage the outer surface of a pipe to which the coupling is attached. Further tightening of the nut then result in the pipe being urged in the direction of the nut travel along its longitudinal axis due to the force exerted on the pipe by the barbed projections. But, because the pipe is typically inserted into the coupling until its end abuts against an abutment surface, there is no additional room for the pipe to move into. As the nut is further Lightened, the pipe is subject to significant forces that result in its deformation and leads to changes in the flow of the fluid through the pipe. Further, the rotation of the nut requires more and more torque to effect the appropriate compression on the seal, and at times, it may be incorrectly assumed that the nut is fully tightened due to the resistive forces of pipe leading to couplings that leak.

It is therefore an object of the present invention to provide for a coupling whereby when the pipe is inserted into the coupling it is caused to be held at a first location, and whereby when the coupling nut is further tightened the pipe is caused to be drawn further towards a second location.

It is a further object of the present invention to provide for a coupling that allows manual insertion of the pipe and that prevents the pipe from being inserted too far into the coupling.

There is currently no known prior art to the applicant whereby a pipe is caused to abut a coupling at a first location and whereby further tightening of the coupling nut will cause the pipe to be drawn towards a second location.

### BRIEF SUMMARY OF THE INVENTION

According to one aspect of this invention there is provided a pipe coupling including:
a body having an external thread and annular inner surfaces defining a socket within said body of larger outer diameter at an outer end than at an intermediate location of said socket, said socket being adapted to receive a pipe wherein;
and a nut having an internal thread at an inner end thereof engaging said body external thread;
a first stop extending at least partially around said annular inner surface in said intermediate location of said socket at a position offset from the end of said intermediate location, said end being distal from said outer end, said first stop being at a predetermined distance from a second stop which is at a position distal from said first stop and defined by said end, said first stop being contactable by an end of said pipe when said pipe is inserted into said socket to define a first pipe position and a first resistance to further pipe insertion, said second stop being contactable by said end of the pipe when, under the action of said nut overcoming said resistance to further pipe insertion, said pipe is moved further into said socket by said predetermined distance to define a second pipe position and a higher resistance to further pipe insertion,
said nut being provided with an inwardly facing abutment surface between the ends of said nut, and an outwardly converging internal circular surface between said abutment surface and the outer end of said nut;
an annular sleeve having an abutment surface at its outer end co-operable with said abutment surface of the nut, and a resilient gasket ring secured to the inner end of said annular sleeve;
a deformable gripping member having an outwardly converging outer surface complementary to said outwardly converging internal nut surface, said gripping member having an internal surface with barbs extending radially inwardly therefrom;
the internal diameters of said socket inner end, sleeve and gripping member being each slightly greater than an external diameter of said pipe such that said end of said pipe is freely insertable through said gripping member and into said socket intermediate location until it abuts said first stop, and such that tightening of said nut over said external thread causes axial movement of said gasket ring, sealable engagement of said gasket ring and said body, radially inward deformation of said gripping member such that the said barbs clamp said pipe at a first position of the nut relative to the body, and axial movement of said pipe overcoming said resistance such as to drive the pipe past said first stop and into engagement of said second stop defined by the end of said intermediate location and corresponding to a second position of the nut relative to the body,
said pipe coupling being characterised by the said predetermined distance being equal to the distance between the said first and second positions of the nut relative to the body.

In an embodiment according to the invention, there is provided a pipe coupling including amongst other features: a body having an external thread and annular inner surfaces defining a socket within the body of larger outer diameter at an outer end than at an intermediate location of said socket; a stop extending at least partially around the annular inner surface in the intermediate location of said socket at a position offset from the end of said intermediate location where the end is distal from said outer end;
a nut having an internal thread at an inner end thereof engaging said body external thread, an inwardly facing abutment surface between ends of said nut, and an outwardly converging internal circular surface between said abutment surface and an outer end of said nut; an annular sleeve having an abutment surface at its outer end co-operable with said nut abutment surface, and a resilient gasket secured to its inner end;
a deformable gripping member having an outwardly converging outer surface complementary to said outwardly converging internal nut surface, the gripping member having an internal surface with barbs extending radially inwardly therefrom;
internal diameters of said socket inner end, sleeve and gripping member all being slightly greater than an external diameter of a pipe to which said coupling is securable, such that an end of said pipe is freely insertable through said gripping member and into sail socket intermediate part until it abuts the stop, and tightening of said nut over said external thread causes axial movement of said gasket ring, sealable engagement of said gasket ring and said body, radially inward deformation of said gripping member such that the said barbs clamp said pipe, and axial movement of said pipe over the stop and towards the end of said intermediate location.

The use of the stop assists in properly coupling the pipe. A user inserts the pipe into the coupling to a location where they can feel resistance to the pipe moving further into the coupling. This position then still provides the pipe with room to move inwardly into the pipe as it does when the nut is tightened. In this way, since the pipe is not inserted too deeply into the coupling its end is not caused to deform under tightening of the nut.

Preferably the stop is an annular abutment surface extending circumferentially around the annular inner surface.

Preferably the stop is a plurality of projections positioned circumferentially and symmetrically around the inner annular surface.

In preference there are at least three projections disposed 120 degrees angularly to each other. Preferably the height of the projections is at least equal to the thickness of the pipe.

In preference the projections are wedge shaped projections whose longitudinal direction extends in the longitudinal direction of the coupling.

Preferably the front surface of the wedge facing the outer end is disposed at an angle other than a right angle but greater than 45 degrees to the longitudinal axis.

Preferably the front surface has at least two faces whose angle to the longitudinal axis is less than 90 degrees.

Advantageously the projections are wedge shaped projections whose longitudinal direction extends generally perpendicular to the longitudinal direction of the coupling.

Advantageously the wedge shaped projections are of an arcuate shape.

According to another aspect of this invention, there is provided a method of connecting a pipe to a pipe coupling according to said one aspect of this invention.

The typical coupling to which the present invention can be applied includes a gripping member and a sub-assembly of a compression sleeve and resilient gasket ring generally attached to the inner end of the compression sleeve. A pipe end is freely insertable through the sub-assembly and into a socket in the body of the coupling abutting against a pipe abutment surface or stop. The gasket ring encounters an abutment in its socket in the body as the nut is tightened, wherein tightening of the nut radially compresses the gripping member so that its inwardly directed barbed projections engage the outer surface of a pipe to which the coupling is attached. When the barbs have engaged the pipe, further tightening of the nut causes the pipe to be forced inwardly into the coupling past the pipe abutment surface and towards an abutment shoulder. The longitudinal distance between the pipe abutment surface and the abutment shoulder is generally equal to the longitudinal travel of the nut from the position at which the barbed projections have gripped the pipe to the final tightened position of the nut. There are also provided abutment surfaces within the body of the coupling or the end of the body, and the nut, that abut inner and outer surfaces of a flange outstanding from the outer end of the compression sleeve.

### BRIEF DESCRIPTION OF THE DRAWINGS

The accompanying drawings, which are incorporated in and constitute a part of this specification, illustrated several implementations of the invention and, together with the description, serve to explain the advantages and principles of the invention. In the drawings,
- Figure 1: is a central elevational section that shows a pipe end inserted through a sub assembly comprising a nut, gripping member and sleeve, and into a socket, in the body of a fitting before the nut being tightened;
- Figure 2: is a similar section showing the configuration of components and location of the pipe when the nut is tightened onto the body;
- Figure 3: is a central elevational section showing a dual pipe coupling wherein one side the nut has been tightened and on the other before being lightened;
- Figure 4: is a partial perspective cut-away view of a pipe abutment surface according to a first embodiment of the invention;
- Figure 5: is a partial perspective cut-away view of a pipe abutment surface according to a second embodiments of the invention;
- Figure 6: is a partial perspective cut-away view of a pipe abutment surface according to a third embodiment of the invention;
- Figure 7: is a detailed view of the pipe abutment surface of Figure 6;
- Figure 8: is a partial perspective cut-away view of a pipe abutment surface according to a fourth embodiment of the invention; and
- Figure 9: is a cross-sectional view of one of the projections of Figure 8.

### DESCRIPTION OF THE PREFFERED EMBODIMENT

The following detailed description of the invention refers to the accompanying drawings.

Although the description includes exemplary embodiments, other embodiments are possible, and changes may be made to the embodiments described without departing from the scope of the invention as defined by the claims. Whenever possible, the same reference numbers will be used throughout the drawings and the following description to refer to the same and like parts.

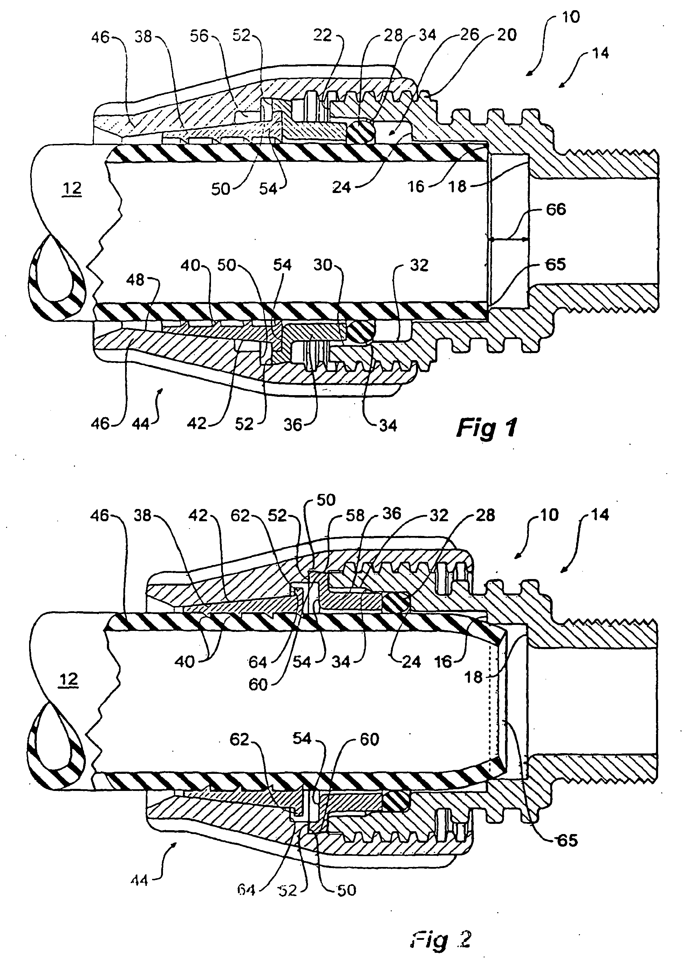

There is shown in Figures 1 a coupling with an inserted pipe before tightening of the nut. The coupling 10 that engages the outer surface of pipe 12 includes a body 14 that has a pipe abutment surface 16 which is abutted by the end of the pipe 12 when inserted into the coupling as shown in Figure 1. The body includes a further shoulder 18 whose diameter is smaller than that of the pipe abutment surface 16.

The body 14 has a male thread 20, and between the outer end 22 of the body and the shoulder 18 is a generally annular planar surface 24 which constitutes an abutment surface of a socket or cavity 26 for a resilient gasket ring 28, abutment shoulder 18 of the socket 26 being the inner end of the socket, the socket 26 also having two cylindrical intermediate and axially outer walls 30 and 32 separate by a step 34 (three diameters in all), the diameter of the outer wall 30 exceeding that of the inner wall 32.

Surrounding the pipe 12 is a compression sleeve 36, which carries the resilient gasket ring 28 on its inner end, being fused, bonded, or otherwise affixed to the end of the compression sleeve 36. This could alternatively be engaged by a mechanical tongue and groove or otherwise affixed on the face end of the sleeve 36, and the outer diameter of gasket ling 28 is less than the diameter of outer wall 30 but greater than the diameter of intermediate wall 32, so that the compression sleeve can be readily inserted into the body 14 with the gasket ring 28 being freely movable adjacent wall 32 but requiring compression by axial movement of compression sleeve 36 to enter socket 26.

Adjacent but axially outwardly of sleeve 36 is a gripping member 38 having radially inwardly but axially spaced barb projections 40, and having an outwardly converging tapered surface 42. The gripping member 38 must be radially deformable, and thereby circumferentially deformable, and is typically a split ring.

The nut 44 is provided with a tail 46 having an outwardly converging inner tapered surface 48 the included angle of which is approximately the same as the tapered surface 42 of the gripping member 38, and inwardly from the outer end of tail 46 there is an annular planar shoulder 50 which, upon tightening of the nut 44, will bear against end surface 52 of compression sleeve 36.

The annular surface 54 of the flange at the outer end of sleeve 36 is spaced axially inwardly a short distance from the surface 52.

When the pipe 12 is inserted into the socket 26 of the coupling as shown in Figure 1 it abuts against the pipe abutment surface 16. Initial tightening of the nut 44 on the body 14 will not cause abutment of shoulder 50 with annular surface 52 of the sleeve 36. The inner end of the gripping member 38 is loosely contained within a recess 56 in the outer end of sleeve 36, and the gasket ring 28, sleeve 36, and gripping member 38 move in together with the nut 44 since there is a clearance of all portions of the coupling around the polymeric pipe 12 when it is first inserted. However, after the nut 44 travels a short axial distance inwardly the gasket ring 28 is intercepted by the step 34 and will not pass that step until compressed. Continued movement of the nut therefore causes a small axially inward movement of the sleeve 36 and the gripping member 38, and must be accommodated by the sliding of inner surface 48 over the outer tapered surface 42, in turn causing the barb projections 40 of the gripping member 38 to engage the outer surface of pipe 12.

When the barb projections 40 have engaged the pipe, further tightening of the nut 44 causes the pipe 12 to be forced inwardly into the body 14. The longitudinal forces are such that the end of the pipe 12 that abuts abutment surface 16 is compressed and/or deformed so that it travels past surface 16 towards shoulder 18.

Tightening of the nut 44 (generally by rotation in the clockwise direction) also brings the shoulder 50 into abutment with the annular surface 52 of compression sleeve 36 and progressed the sleeve 36 axially inwardly, causing sufficient compression of the gasket ring 28 for it to enter the inner smaller diameter intermediate portion 32 of the socket 26. The socket is of such dimension that the gasket ring 28 effects a satisfactory seal between the body 14 and the pipe 12, and this is further enhanced when the nut 44 is fully tightened so that the two surfaces of the sleeve 36 respectively lie in abutment with the outer end 22 of the body 14 and the shoulder 50 as shown in Figure 2. At this location, compression of the resilient gasket ring 28 results in a seal, which is effective against very high pressures. Since the nut cannot be progressed any further inwardly, the compression of both the rings 28 and 38 is controlled to lie within the range dictated by the diameters of the pipe 12. In addition, the longitudinal distance 66 between the abutment surface 16 and shoulder 18 is generally equal to the longitudinal travel of the nut when the barbed projections have first gripped the pipe.

If the pipe 12 is not inserted into the body 14 and the nut 44 is screwed forwardly, the pipe 12 will not be able to be forced inwardly to the body 14 unless the nut is screwed back to its loose state.

When the nut 44 is screwed back (usually rotation anti-clockwise) the compression sleeve 36 is also pulled back (rearwardly) due to a loose engagement of the reverse tapered surfaces 58 of compression sleeve 36 and 60 of nut 44, and subsequent abutment of compression sleeve 36 against inner end of gripping member'38. Because the gasket ring 28 is attached to the inner end of sleeve 36 that is also withdrawn and does not remain in the small diameters portion of socket 26.

As illustrated in Figure 2, when sleeve nut 44 is tightened over body 14, radially outstanding flange 62 of gripping member 38 lies adjacent shoulder 64 of nut 44. If a tensile load is applied to pipe 12, and body 14 is fixed, any relative movement will initially impart more radial compression to gripping member 38, but such movement (if any) will be very small, and will be resisted by abutment of flange 62 against shoulder 64.

Simultaneously, as the sleeve 44 is being tightened and the projections 40 engage the pipe the pipe end 65 is forced past the abutment surface 16 towards shoulder 18. When the pipe 12 is being manually inserted it therefore allows the user to appreciate that the pipe is in the correct position within the body 14 whilst there still being sufficient room for further travel of the pipe inwardly due to the tightening of the nut.

It will be appreciated that the assembly may be sold with the components in place and held captive while nevertheless retaining a clearance over the outer surface of pipe 12.

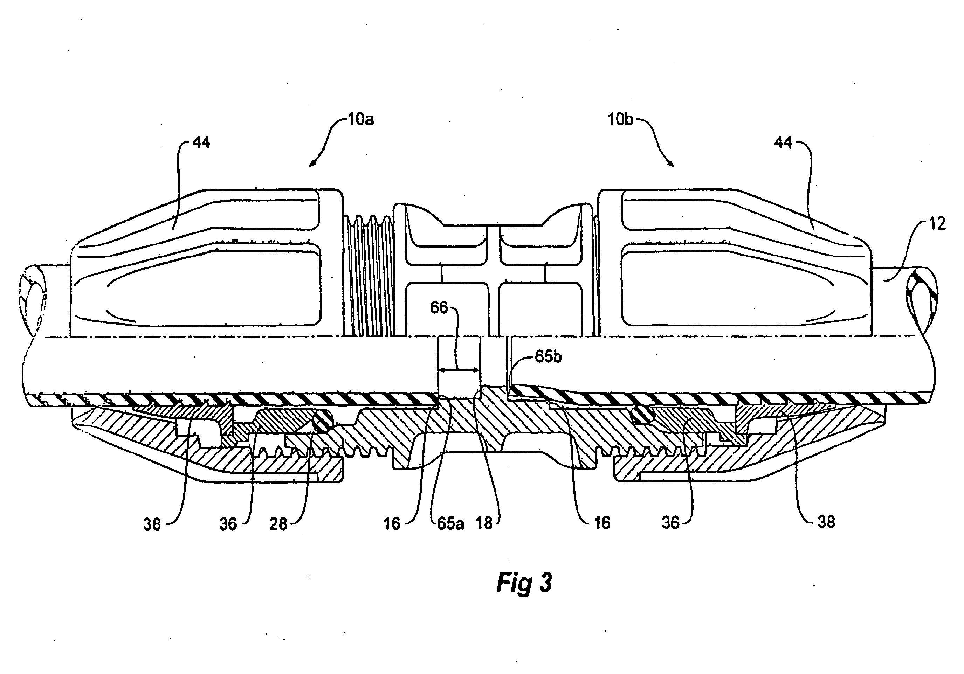

Illustrated in Figure 3 is a two-pipe coupling, where the coupling may be used to join two pipes together. As seen in that Figure, the left hand side of the coupling 10a has had a pipe inserted and the nut 44 is yet to be tightened with the end of the pipe 65a abutting surface 16, whilst the end of the other pipe 65b has had the pipe inserted and the nut 44 fully tightened whereupon the pipe end 65b has moved past shoulder 16 and towards the abutment surface 18. In this embodiment, the distance 66 between the surface 16 and the shoulder 18 is generally equal to the longitudinal travel of the nut 44 when the barbed projections 40 have engaged the pipe 12. Thus when the nut 44 is fully tightened the pipe 12 is positioned generally against shoulder 18.

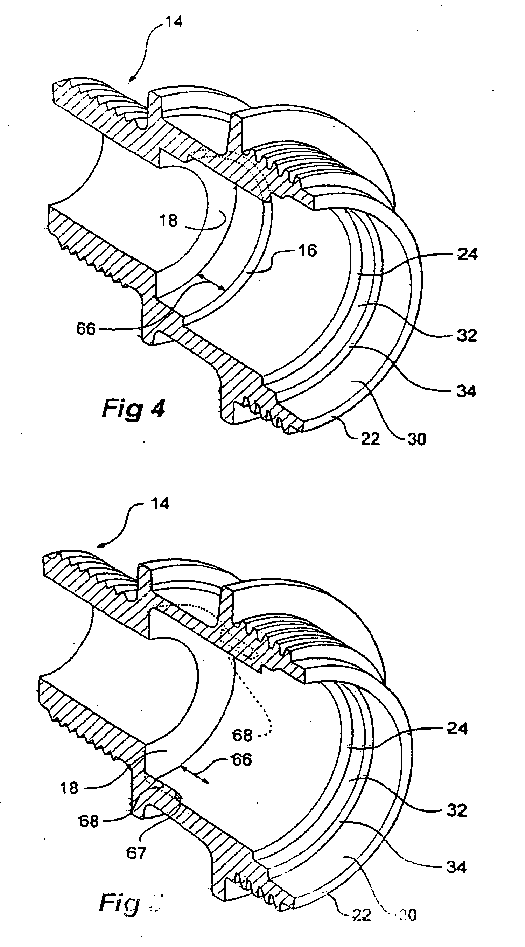

As illustrated in Figure 4 where there is shown a cut-awvay partial perspective view of the body 14, the abutment surface 76 may be an annular step where the distance 66 between the surface 16 and shoulder 18 is greater to or equal to the full travel of the nut. It has also been discovered that the annular step angle to the longitudinal axis of the body may be a right angle for when being tightened the nut produces sufficient longitudinal force that the pipe is forced even beyond the right angle. However, those skilled in the art will appreciate than the angle may be less than 90 degrees, provided that when the pipe is manually inserted, the user feels sufficient resistance to assume that the pipe has been inserted sufficiently deeply into the body.

Of course, those skilled in the art will readily appreciate that the pipe abutment surface need not be a solid annular ring as illustrated in Figure 4, but could equally well be a plurality of projections symmetrically circumferentially disposed within the body 14 and positioned before the abutment surface 18. This is illustrated in Figure 5 where the abutment surface 16 is defined by three wedges 68 located at 120-degree intervals within the body of the pipe. The length of the wedges is equal to the length 66 being equal to the travel of the nut when fully tightened.

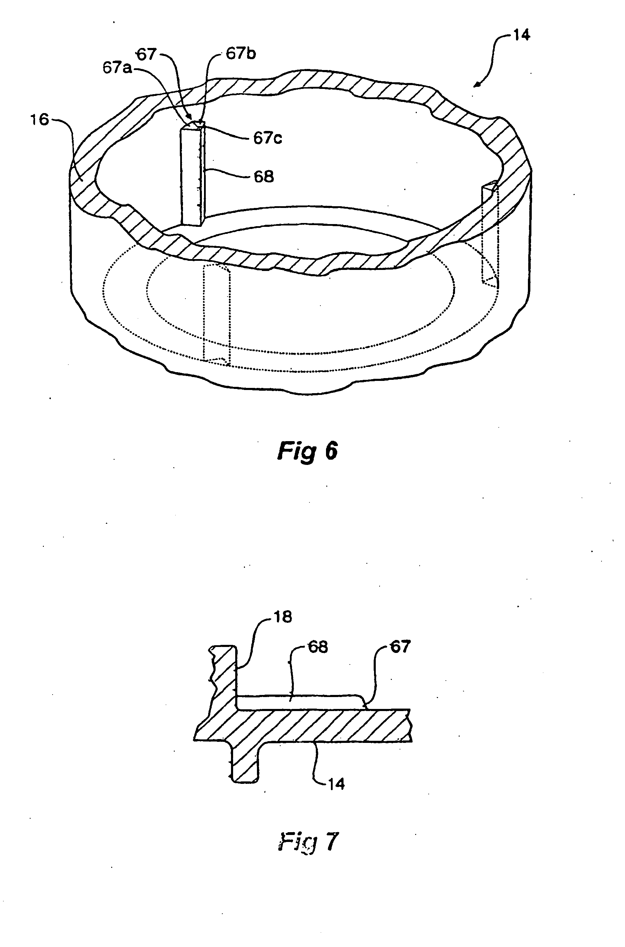

Whilst Figures 4 and 5 illustrated the abutment surface having a generally right angle to the longitudinal axis of the body, the front face 67 of the wedges may be tapered to enable for easier movement of the pipe towards the shoulder 18 when the nut is being tightened. The angle has to be chosen so that when the pipe is being manually inserted it is not easily possible to push the pipe past the faces 67 so that the user feels as if the pipe has been sufficiently inserted into the body. However, it has been discovered that even angles of around 45 degrees are sufficiently steep to provide an abutment surface 16 against which a pipe abuts when manually inserted. Thus, as illustrated in the embodiment of figure 6 the surface 67 includes two faces 67a and 67b whose apex 67c is at an angle of some 70 degrees to the longitudinal axis of the body.

It is to be understood that where the abutment surface 16 is defined by individual projections, the number of projections is not necessarily three, and there may be more projections. In addition, in such an arrangement, the angle of the front faces of the wedges that define the surface 16 may vary for different projections. Thus some of the projections may be rightangled whilst other at a much gentler angle. The body of the pipe between the surface 16 and shoulder 18 may also be of a non-smooth configuration to assist in preventing the pipe from rotational motion when the nut is being tightened.

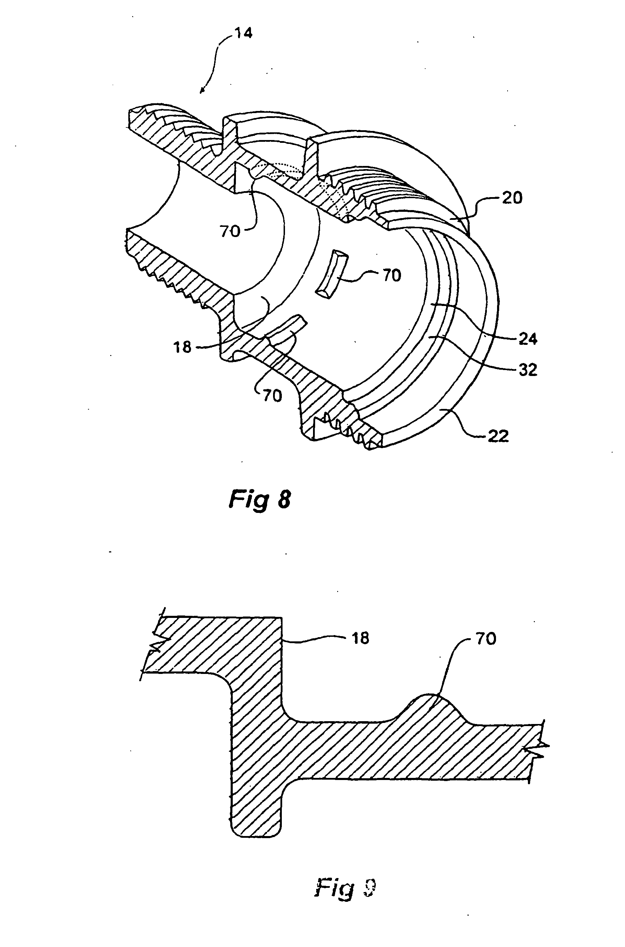

Another alternative embodiment includes varying the total length or orientation of the projections. Referring now to Figure 8, there is shown a plurality of projections 70 at right angles to the longitudinal axis of the body. The projections arc preferably hump or arcuate shape in their cross-section, as shown in Figure 9, the configuration being such that a pipe will still abut against the projections when manually inserted but will still enable the pipe to pass the projections when under the force exerted by tightening of the nut.

Some of the projections 70 may not extend all the way to the shoulder 18 so that when the pipe reachs the shoulder it expands outwardly and springs back into its natural shape.

Similarly, with a solid annular abutment surface as illustrated in Figure 1 and 2, the diameter of the pipe 12 between the surface 16 and the shoulder 18 may be equal to that before the shoulder. Thus when the pipe has been forced past the surface 16 its diameter increases so that the end of the pipe is not caused to deform to the same degree.

Those skilled in the art will readily appreciate that there are many alternative constructions of surface 16. As discussed above it may be formed by an annular shoulder in the body of the coupling or by including discrete projections whose size, shape and orientation provides a sufficient surface area so that when a user inserts a pipe into the body they know that they have inserted the pipe as far is necessary whilst there still being sufficient room to accommodate further movement of the pipe into the coupling when tightening of the nut.

Whilst the foregoing description has set forth the preferred embodiments of the present invention in some detail, it is to be understood that numerous modifications, obvious to a person skilled in the art, may be made without departing from the scope of the invention. It is therefore to be understood that the invention is not limited to the specific embodiments as herein described but only by the claims appended hereafter.

## Claims

1. A pipe coupling (10;10a) including:
a body (14) having an external thread (20) and annular inner surfaces (30;32) defining a socket (26) within said body of larger outer diameter at an outer end (30) than at an intermediate location (32) of said socket (26), said socket (26) being adapted to receive a pipe (12) therein;
and a nut (44) having an internal thread at an inner end thereof engaging said body external thread (20);
a first stop (16;68;70) extending at least partially around said annular inner surface in said intermediate location (32) of said socket (26) at a position offset from the end (18) of said intermediate location (32), said end (18) being distal from said outer end (30), said first stop (16; 68; 78) being at a predetermined distance (56) from a second stop which is at a position distal from said first stop (16;68;70) and defined by said end (18), said first stop (16;68;70) being contactable by an end of said pipe (12) when said pipe (12) is inserted into said socket (26) to define a first pipe position and a first resistance to further pipe insertion, said second stop being contactable by said end of the pipe (12) when, under the action of said nut (44) overcoming said resistance to further pipe insertion, said pipe (12) is moved further into said socket (26) by said predetermined distance (66) to define a second pipe position and a higher resistance to further pipe insertion,
said nut (44) being provided with an inwardly facing abutment surface (50,54) between the ends of said nut (44), and an outwardly converging internal circular surface (48) between said abutment surface (50) and the outer end (46) of said nut (44);
an annular sleeve (36) having an abutment surface (52) at its outer end co-operable with said abutment surface, (50) of the nut, and a resilient gasket ring (28) secured to the inner end of said annular sleeve (36);
a deformable gripping member (38) having an outwardly converging outer surface (42) complementary to said outwardly converging internal nut surface (48), said gripping member (38) having an internal surface with barbs (40) extending radially inwardly therefrom;
the internal diameters of said socket inner end (16), sleeve (36) and gripping member (38) being each slightly greater than an external diameter of said pipe (12) such that said end of said pipe (12) is freely insertable through said gripping member (38) and into said socket intermediate location (32) until it abuts said first stop (16;68;70), and such that tightening of said nut (44) over said external thread (20) causes axial movement of said gasket ring (28), sealable engagement of said gasket ring (28) and said body (14), radially inward deformation of said gripping member (38) such that the said barbs (40) clamp said pipe (12) at a first position of the nut (44) relative to the body (14), and axial movement of said pipe (12) overcoming said resistance such as to drive the pipe (12) past said first stop (16;68;70) and into engagement of said second stop (18) defined by the end (18) of said intermediate location (32) and corresponding to a second position of the nut (44) relative to the body (14),
said pipe coupling (10;10a) being **characterised by** the said predetermined distance (66) being equal to the distance between the said first and second positions of the nut (44) relative to the body (14).

2. A pipe coupling according to Claim 1, **characterised in that** said first stop (16;68;70) comprises an annular abutment surface (16) extending circumferentially around said annular inner surface.

3. A pipe couplings according to Claim 1, **characterised in that** said first stop (16;68;70) comprises a plurality of projections (68;70) positioned circumferentially and symmetrically around said inner annular surface.

4. A pipe coupling according to Claim 3, **characterised in that** there are three said projections (68;70) disposed 120 degrees angularly to each other.

5. A pipe coupling according to Claim 3 or Claim 4, **characterised in that** said projections (68) are wedge shaped projections each having a longitudinal direction that extends in the longitudinal direction of said coupling (10).

6. A pipe coupling according to Claim 5, **characterised in that** said wedge shaped projections (68) have each a front face (67;67a;67b) facing the outer and and disposed at an angle other than a right angle but greater than 45 degrees to the longitudinal axis.

7. A pipe coupling according to Claim 6, **characterised in that** said wedge shaped projections (68) have each a front surface that has at least two faces (67a, 67b) whose angle to the longitudinal axis is less than 90 degrees.

8. A pipe coupling according to Claim 3 or Claim 4, **characterised in that** said projections (68;70) are wedge shaped projections (70) the longitudinal directions of which extend generally perpendicular to the longitudinal direction of said coupling.

9. A pipe coupling according to Claim 8, **characterised in that** said wedge shaped projections (70) are of an arcuate shape.

10. A method of connecting a pipe (12) to a coupling (10;10a) according to any one of the preceding Claims,
wherein the pipe (12) is freely inserted into the coupling until a free end of the pipe (12) engages said first stop (16;68;70) to provide an insertion resistance,
said nut (44) is tightened about the externally threaded body (14) of the coupling (10;10a) to cause said grip ring (38) to move in both the radial and longitudinal direction and cause said barbs (40) to engage the pipe (12) at a first position of the nut (44), to move the gasket (28) into a sealing cavity (26), and by further rotation of said nut (44) overcome said resistance and cause the end of said pipe (12) to move over said first stop (16;68;70) and further into said coupling (20;10a) and into abutment of said second stop (18) in which said nut (44) adopts a second position, the said predetermined distance (66) being equal to the distance between the said first and second positions of the nut (44) relative to the body (14).

## Patentansprüche

1. Rohrkupplung (10; 10a), die aufweist:
einen Körper (14) mit einem Außengewinde (20) und ringförmigen Innenflächen (30; 32), die einen Aufnahmeraum (26) in dem Körper begrenzen, der an einem äußeren Ende (30) einen größeren Außendurchmesser als in einem Zwischenbereich (32) des Aufnahmeraums (26) aufweist, wobei der Aufnahmeraum (26) zur Aufnahme eines Rohrs (12) ausgebildet ist;
eine Mutter (44) mit einem an einem inneren Ende vorgesehenen Innengewinde, das in das Außengewinde (20) des Körpers eingreift;
einen ersten Anschlag (16; 68; 70), der sich wenigstens teilweise um die ringförmige Innenfläche in dem Zwischenbereich (32) des Aufnahmeraums (26) an einer gegenüber dem Ende (18) des Zwischenbereichs (32) versetzten Stelle erstreckt, wobei das Ende (18) entfernt von dem äußeren Ende (30) liegt, der erste Anschlag (16; 68; 70) in einem vorgegebenen Abstand (66) zu einem zweiten Anschlag angeordnet ist, der an einer von dem ersten Anschlag (16; 68; 70) entfernten Stelle liegt und von dem Ende (18) gebildet ist, wobei ein Ende des Rohrs (12) in Anlage an den ersten Anschlag (16; 68; 70) bringbar ist, wenn das Rohr (12) in den Aufnahmeraum (26) eingeführt wird, um eine erste Rohrstellung und einen ersten Widerstand gegen ein weiteres Einführen des Rohrs zu bilden, wobei das Ende des Rohrs (12) in Anlage an den zweiten Anschlag bringbar ist, wenn unter durch Einwirkung der Mutter (44), die den Widerstand gegen weiteres Einführen des Rohrs überwindet, das Rohr (12) um den vorgegebenen Abstand (66) weiter in den Aufnahmeraum (26) eingeführt wird, um eine zweite Rohrstellung und einen höheren Widerstand gegen weiteres Einführen des Rohrs zu bilden,
wobei die Mutter (44) mit einer nach innen gerichteten Anlagefläche (50, 54) zwischen den Enden der Mutter (44) versehen ist, sowie mit einer sich nach außen verjüngenden inneren kreisförmigen Fläche (48) zwischen der Anschlagfläche (50) und dem äußeren Ende (46) der Mutter (44);
eine ringförmige Hülse (36) mit einer Anlagefläche (52) an ihrem äußeren Ende, die mit der Anlagefläche (50) der Mutter in Wirkverbindung bringbar ist, und eine federnde Ringdichtung (28), die am inneren Ende der ringförmigen Hülse (36) befestigt ist;
ein verformbares Klemmstück (38) mit einer sich nach außen verjüngenden Außenfläche (42) passend zu der sich nach außen verjüngenden Innenfläche (48) der Mutter, wobei das Klemmstück (38) auf seiner Innenfläche mit sich radial nach innen erstreckenden Widerhaken (40) versehen ist;
wobei die Innendurchmesser des inneren Endes (16) des Aufnahmeraums, der Hülse (36) und des Klemmstücks (38) jeweils etwas größer -als ein Außendurchmesser des Rohrs (12) sind, so dass das Ende des Rohrs (12) durch das Klemmstück (38) hindurch und in den Zwischenbereich (32) des Aufnahmeraums bis zur Anlage an dem ersten Anschlag (16; 68; 70) frei einführbar ist, und zwar dergestalt, dass durch Festziehen der Mutter (44) über das Außengewinde (20) die Ringdichtung (28) eine Axialbewegung ausführt, die Ringdichtung (28) mit dem Körper (14) dichtend in Eingriff gelangt, das Klemmstück (38) eine radial nach innen gerichtete Verformung erfährt, so dass die Widerhaken (40) das Rohr (12) in einer ersten Stellung der Mutter (44) gegenüber dem Körper (14) verspannen, und die Axialbewegung des Rohrs (12) den Widerstand überwindet, so dass das Rohr (12) an dem ersten Anschlag (16; 68; 70) vorbei in Anlage an den zweiten Anschlag (18) gebracht wird, der durch das Ende 18 des Zwischenbereichs (32) gebildet ist und einer zweiten Stellung der Mutter (44) gegenüber dem Körper (14) entspricht, wobei die Rohrkupplung (10; 10a) **dadurch gekennzeichnet ist, dass** der vorgegebene Abstand (66) gleich ist als der Abstand zwischen der ersten und zweiten Stellung der Mutter (44) gegenüber dem Körper (14).

2. Rohrkupplung nach Anspruch 1, **dadurch gekennzeichnet, dass** der erste Anschlag (16; 68; 70) eine ringförmige Anlagefläche (16) aufweist, die sich in Umfangsrichtung um die ringförmige Innenfläche erstreckt.

3. Rohrkupplung nach Anspruch 1, **dadurch gekennzeichnet, dass** der erste Anschlag (16; 68; 70) eine Vielzahl von Vorsprüngen (68; 70) aufweist, die in Umfangsrichtung und symmetrisch um die ringförmige Innenfläche angeordnet sind.

4. Rohrkupplung nach Anspruch 3, **dadurch gekennzeichnet, dass** drei Vorsprünge (68; 70) vorgesehen sind, die unter einem Winkel von 120 Grad zueinander angeordnet sind.

5. Rohrkupplung nach Anspruch 3 oder Anspruch 4, **dadurch gekennzeichnet, dass** die Vorsprünge (68) keilförmige Vorsprünge sind, die jeweils eine sich in Längsrichtung der Kupplung (10) erstreckende Längsrichtung aufweisen.

6. Rohrkupplung nach Anspruch 5, **dadurch gekennzeichnet, dass** die keilförmigen Vorsprünge (68) jeweils eine Stirnfläche (67; 67a; 67b) aufweisen, die dem äußeren Ende zugewandt ist und nicht rechtwinklig, jedochunter einem Winkel größer als 45 Grad zur Längsachse angeordnet ist.

7. Rohrkupplung nach Anspruch 6, **dadurch gekennzeichnet, dass** die keilförmigen Vorsprünge (68) jeweils eine Vorderseite aufweisen, die mindestens zwei Stirnflächen (67a, 67b) umfasst, deren Winkel zur Längsachse kleiner als 90 Grad ist.

8. Rohrkupplung nach Anspruch 3 oder Anspruch 4, **dadurch gekennzeichnet, dass** die Vorsprünge (68; 70) keilförmige Vorsprünge (70) sind, deren Längsrichtungen sich im allgemeinen senkrecht zur Längsrichtung der Kupplung erstrecken.

9. Rohrkupplung nach Anspruch 8, **dadurch gekennzeichnet, dass** die keilförmigen Vorsprünge (70) bogenförmig ausgebildet sind.

10. Verfahren zum Verbinden eines Rohrs (12) mit einer Kupplung (10; 10a) nach einem der vorhergehenden Ansprüche,
wobei das Rohr (12) frei in die Kupplung eingeführt wird, bis ein freies Ende des Rohrs (12) an dem ersten Anschlag (16; 68; 70) zur Anlage gelangt,
die Mutter (44) um den mit einem Außengewinde versehenen Körper (14) der Kupplung (10; 10a) festgezogen wird, so dass der Klemmring (38) sowohl in radialer als auch Längsrichtung bewegt wird und die Widerhaken (40) in einer ersten Stellung der Mutter (44) mit dem Rohr (12) in Eingriff gelangen, die Dichtung (28) in einen dichtenden Hohlraum (26) hinein bewegt wird, und durch weitere Drehung der Mutter (44) der Widerstand überwunden wird und das Ende des Rohrs (12) über den ersten Anschlag (16; 68; 70) hinaus und weiter in die Kupplung (10; 10a) hinein bis zur Anlage an dem zweiten Anschlag (18) bewegt wird, bei dem die Muter (44) eine zweite Stellung einnimmt, wobei der vorgegebene Abstand (66) gleich ist als der Abstand zwischen der ersten und zweiten Stellung der Mutter (44) gegenüber dem Körper (14).

## Revendications

1. Raccord pour tuyaux (10 ; 10a), comprenant :
un corps (14) présentant un filetage externe (20) et des surfaces intérieures (30 ; 32) annulaires, définissant à l'intérieur dudit corps une cavité (26) de plus grand diamètre extérieur, à une extrémité extérieure (30), qu'à un emplacement intermédiaire (32) de ladite cavité (26), ladite cavité (26) étant adaptée pour recevoir en son sein un tuyau (12) ;
et un écrou (44) ayant, à une extrémité intérieur de celui-ci, un filetage interne venant en prise avec ledit filetage externe de corps (20) ;
une première butée (16 ; 68 ; 70) s'étendant au moins partiellement autour de ladite surface interne annulaire, audit emplacement intermédiaire (32) de ladite cavité (26), en une position décalée vis-à-vis de l'extrémité (18) dudit emplacement intermédiaire (32), ladite extrémité (18) étant distale vis-à-vis de ladite extrémité extérieure (30), ladite première butée (16 ; 68 ; 70) étant située à une distance (66) prédéterminée d'une deuxième butée située en une position distale vis-à-vis de ladite première butée (16 ; 68 ; 70) et définie par ladite extrémité (18), ladite première butée (16 ; 68 ; 70) étant susceptible d'être mise en contact avec une extrémité dudit tuyau (12), lorsque ledit tuyau (12) est inséré dans ladite cavité (26) pour définir une première position de tuyau et une première résistance à une plus profonde insertion du tuyau, ladite deuxième butée étant susceptible d'être mise en contact avec ladite extrémité du tuyau (12), lorsque, sous l'action dudit écrou (44) surmontant ladite résistance à une plus profonde insertion du tuyau, ledit tuyau (12) est introduit plus profondément dans ladite cavité (26), de la valeur de ladite distance (66) prédéterminée, de manière à définir une deuxième position de tuyau et une plus grande résistance à une plus profonde insertion du tuyau,
ledit écrou (44) étant muni d'une surface de butée (50, 54) tournée vers l'intérieur, entre les extrémités dudit écrou (44), et d'une surface intérieure (48) circulaire, convergent vers l'extérieur, entre ladite surface de butée (50) et l'extrémité extérieure (46) dudit écrou (44) ;
une douille (36) annulaire présentant à son extrémité extérieure une surface de butée (52), susceptible de coopérer avec ladite surface de butée (50) de l'écrou, et une bague de joint (28) élastique, immobilisée sur l'extrémité intérieure de ladite douille (36) annulaire ;
un organe de saisie (38) déformable, présentant une surface extérieure (42) convergent vers l'extérieur, complémentaire de ladite surface intérieure d'écrou (48) convergent vers l'extérieur, ledit organe de saisie (38) présentant une surface interne munie de barbes (40) s'étendant radialement vers l'intérieur de celle-ci ;
les diamètres intérieurs de ladite extrémité intérieure de cavité (16), de ladite douille (36) et de l'organe de saisie (38) étant chacun légèrement plus grands qu'un diamètre externe dudit tuyau (12), de telle manière que ladite extrémité dudit tuyau (12) puisse être insérée librement à travers ledit organe de saisie (38) et dans ledit emplacement intermédiaire de cavité (32), jusqu'à ce qu'elle vienne en butée sur ladite première butée (16 ; 68 ; 70) et de manière que le serrage dudit écrou (44) sur ledit filetage externe (20) provoque un déplacement axial de ladite bague de joint (28), une mise en contact avec effet d'étanchéité de ladite bague de joint (28) et dudit corps (14), une déformation, orientée radialement vers l'intérieur, dudit organe de saisie (38) telle que lesdites barbes (40) serrent ledit tuyau (12) en une première position de l'écrou (44) par rapport au corps (14), et un déplacement axial dudit tuyau (12) surmontant ladite résistance, de manière à entraîner le tuyau (12) en lui faisant passer ladite première butée (16 ; 68 ; 70) et en venant en contact avec ladite deuxième butée (18), définie par l'extrémité (18) dudit emplacement intermédiaire (32) et correspondant à une deuxième position de l'écrou (44) par rapport à au corps (14) ;
ledit raccord pour tuyaux (10 ; 10a) étant **caractérisé en ce que** ladite distance (66) prédéterminée est égale à la distance entre lesdites première et deuxième position de l'écrou (44) par rapport au corps (14).

2. Raccord pour tuyaux selon la revendication 1, **caractérisé en ce que** ladite première butée (16 ; 68 ; 70) comprend une surface de butée (16) annulaire s'étendant circonférentiellement autour de ladite surface intérieure annulaire.

3. Raccord pour tuyaux selon la revendication 1, **caractérisé en ce que** ladite première butée (16 ; 68 ; 70) comprend une pluralité de saillies (68 ; 70) disposées circonférentiellement et symétriquement autour de ladite surface intérieure annulaire.

4. Raccord pour tuyaux selon la revendication 3, **caractérisé en ce qu'**il y a trois dites saillies (68 ; 70), disposées à 120° angulairement les unes par rapport aux autres.

5. Raccord pour tuyaux selon la revendication 3 ou la revendication 4, **caractérisé en ce que** lesdites saillies (68) sont des saillies d'allure cunéiforme, ayant chacune une direction longitudinale s'étendant dans la direction longitudinale dudit raccord (10).

6. Raccord pour tuyaux selon la revendication 5, **caractérisé en ce que** lesdites saillies (68) d'allure cunéiforme ont chacune une face avant (67 ; 67a ; 67b) tournée vers l'extrémité extérieure et disposée sous un angle différent d'un angle droit mais supérieur à 45 degrés, par rapport à l'axe longitudinal.

7. Raccord pour tuyaux selon la revendication 6, **caractérisé en ce que** lesdites saillies (68) d'allure cunéiforme ont chacune une surface avant présentant au moins deux faces (67a ; 67b) dont l'angle d'inclinaison par rapport à l'axe longitudinal est inférieur à 90 degrés.

8. Raccord pour tuyaux selon la revendication 3 ou la revendication 4, **caractérisé en ce que** lesdites saillies (68 ; 70) sont des saillies (70) d'allure cunéiforme, dont les directions longitudinales s'étendent de manière globalement perpendiculaire à la direction longitudinale dudit raccord.

9. Raccord pour tuyaux selon la revendication 8, **caractérisé en ce que** lesdites saillies (70) d'allure cunéiforme ont une forme arquée.

10. Procédé de raccordement d'un tuyau (12) à un raccord (10, 10a) selon l'une quelconque des revendications précédentes,
dans lequel le tuyau (12) est inséré librement dans le raccord, jusqu'à ce qu'une extrémité libre du tuyau (12) vienne en contact avec ladite première butée (16 ; 68 ; 70) ;
ledit écrou (44) est serré autour du corps (14) à filetage extérieur du raccord (10 ; 10a) pour provoquer le déplacement de ladite bague de saisie (38) à la fois en direction radiale et longitudinale et provoquer la mise en prise desdites barbes (40) avec le tuyau (12), en une première position de l'écrou (44), pour déplacer le joint (28) dans une cavité d'étanchéité (26), et, au prix d'une rotation supplémentaire dudit écrou (44), surmonter ladite résistance et faire que l'extrémité dudit tuyau (12) passe sur ladite première butée (16 ; 68 ; 70) et pénètre plus profondément dans ledit raccord (10 ; 10a) et vienne en:butée avec ladite deuxième butée (18), dans laquelle ledit écrou (44) prend une deuxième position, ladite distance (66) prédéterminée étant égale à que la distance qu'il y a entre lesdites première et deuxième positions de l'écrou (44) par rapport au corps (14).
